## Europäisches Patentamt

## European Patent Office

## Office européen des brevets

(19)

(11) Veröffentlichungsnummer: **0 123 208**
**B1**

(12) # EUROPÄISCHE PATENTSCHRIFT

(45) Veröffentlichungstag der Patentschrift:
23.06.89

(51) Int. Cl.⁴: **B 60 R 13/04**

(21) Anmeldenummer: **84104034.8**

(22) Anmeldetag: **11.04.84**

(54) **Profilleiste, insbesondere für Fahrzeuge, sowie Verfahren zum Herstellen derselben und Vorrichtung zum Durchführen des Verfahrens.**

(30) Priorität: **22.04.83 DE 3314682**

(43) Veröffentlichungstag der Anmeldung:
**31.10.84 Patentblatt 84/44**

(45) Bekanntmachung des Hinweises auf die Patenterteilung:
**23.06.89 Patentblatt 89/34**

(84) Benannte Vertragsstaaten:
**DE FR GB IT NL SE**

(56) Entgegenhaltungen:
**AT-B-228 424**
**DE-A-1 479 367**
**DE-A-1 930 948**
**FR-A-2 321 406**
**GB-A-857 814**

(73) Patentinhaber: **Gebr. Happich GmbH, Postfach 10 02 49 Clausenbrücke 1, D-5600 Wuppertal 1 (DE)**

(72) Erfinder: **Schlenz, Rolf, Weierstall 1, D-5620 Velbert (DE)**

EP 0 123 208 B1

LIBER, STOCKHOLM 1989

**Beschreibung**

Die Erfindung bezieht sich auf eine Profilleiste, insbesondere für Fahrzeuge, bestehend aus einem allseitig geschlossenen, hohl ausgebildeten Kunststoff-Blasformkörper mit einem an einer Anschlußfläche zur Anlage kommenden rückseitigen Mantelbereich und einem die Sichtseite bildenden vorderseitigen Mantelbereich sowie aus einem Zierstreifen. Die Erfindung bezieht sich weiterhin auf ein Verfahren zum Herstellen der Profilleiste sowie auf eine Vorrichtung zum Durchführen des Verfahrens.

Bei einer durch die AT-B-228 424 bekanntgewordenen, strangartig ausgebildeten Zierleiste, die endlos hergestellt und in Rollen transportiert werden kann, ist vorgesehen, diese aus zwei Teilen, nämlich einem Unterteil und einem von diesem gehaltenen Oberteil zu bilden. Dabei kann das Unterteil aus durchsichtigem Kunststoff mit einer darin eingebetteten metallischen Einlage bestehen, während das Oberteil als Schlauch ausgebildet sein und an der Innerseite eine aufgespiegelte oder aufgedampfte Metallschicht aufweisen kann. Bei dieser bekannten Zierleiste ist der mehrteilige Aufbau, der eine separate Herstellung und eine spätere Verbindung der Einzelteile miteinander verlangt, ebenso von Nachteil, wie die Tatsache, daß die aufgespiegelte oder aufgedampfte Metallschicht nicht gegen äußere korrosive Einflüsse geschützt ist.

Die DE-C-2 536 766 bezieht sich auf eine Zier- oder Schutzleiste mit einem Grundkörper aus Thermoplastischem Kunststoff, der einen in Längsrichtung verlaufenden, an den Enden verschlossenen Hohlraum aufweist und an seiner Auflagefläche mit Befestigungseinrichtungen versehen ist, wobei der Grundkörper der Leiste als in sich geschlossener Blasformkörper ausgebildet ist. Der Grundkörper der Leiste kann außenseitig Vertiefungen oder längslaufende Nuten und/oder Wülste zum Aufklemmen von zusätzlichen Zier- und/oder Verstärkungsleisten aufweisen.

Die der Erfindung zugrunde liegende Aufgabe besteht nun darin, eine als Kunststoff-Blasformkörper ausgebildete Profilleiste mit einem zusätzlichen Zierstreifen zu schaffen, bei der der Zierstreifen gegen äußere Einflusse geschützt ist.

Diese Aufgabe wird erfindungsgemäß dadurch gelöst, daß der Zierstreifen innerhalb des Blasformkörpers angeordnet ist und daß zum Sichtbarmachen desselben der vorderseitige Mantelbereich zumindest einen längsdurchlaufenden Streifen aus transparentem Material aufweist.

Durch diese erfindungsgemäßen Maßnahmen ist der Zierstreifen weitgehend gegen mechanische Beschädigungen, zum Beispiel Zerkratzen seiner Zierfläche wie ebenso gegen äußere korrosive Einflüsse geschützt und vermag zufolge des transparenten Streifens seine Zierfunktion ständig zu erfüllen.

Vorzugsweise erstreckt sich der Zierstreifen im wesentlichen über die Hohlraumlange und -breite des Blasformkörpers und ist damit praktisch unverschiebbar festgelegt.

Eine weitere bevorzugte Maßnahme der Erfindung besteht darin, daß der Zierstreifen an der Innenseite des vorderseitigen Mantelbereichs vorzugsweise durch Verwendung eines Haftvermittlers befestigt ist. Auch diese Maßnahme erbringt eine unverschiebbare Festlegung des Zierstreifens und darüber hinaus eine Stabilisierung der Profilleiste. Dies läßt sich noch optimieren, wenn der Zierstreifen in weiterer Ausgestaltung der Erfindung zumindest mit seinen stirnseitigen Randbereichen im Übergangsbereich vom rückseitigen in den vorderseitigen Mantelbereich eingebettet ist. Gemäß der Erfindung ist weiterhin vorgesehen, daß der Zierstreifen unabhängig von der jeweiligen Querschnittsform des Blasformkörpers eng an der Innenseite des vorderseitigen Mantelbereichs anliegt. Bevorzugterweise besteht der Zierstreifen aus einem Metallband oder einer Metallfolie.

Die erfindungsgemäße Profilleiste weist eine Reihe von besonderen Vorteilen auf. Dabei ist es zunächst vorteilhaft, daß der Zierstreifen im Profilleistenhohlraum angeordnet ist, weil dadurch der Zierstreifen nicht zerkratzt oder durch korrosive Einflüsse beschädigt werden kann. Weiterhin ist durch die bevorzugte Anbindung des Zierstreifens an die Innenwandung des Profilleistenkörpers der Vorteil einer Stabilisierung der Leiste gegeben, die insbesondere Maßveränderungen etwa bei Värmeeinwirkungen entgegenwirkt, was besonders dann sehr wichtig ist, wenn die Profilleiste zum Beispiel mittels eines Doppelklebebandes an einer Fahrzeugkarosserie befestigt werden soll; denn eine solche Befestigungsart ist nur dann zuverlässig, wenn sich die durch Temperaturschwankungen bedingten Maßveränderungen der Profilleiste in sehr engen Grenzen halten.

Eine weitere Aufgabe der Erfindung besteht darin, ein besonders wirtschaftliches Verfahren zum Herstellen der Profilleiste aufzuzeigen. Das hierfür erfindungsgemäß vorgesehene Verfahren zeichnet sich durch folgende Verfahrensschritte aus:

a)  ein Strangpreßprofil aus thermoplastischen Kunststoffen mit zumindest einem transparenten Längsstreifen wird um einen mitlaufenden Zierstreifen herum koextrudiert,

b)  das Strangpreßprofil wird in Abschnitte unterteilt,

c)  die Enden jedes Abschnittes werden zusammengequetscht,

d)  in den Abschnitt werden Öffnungen eingebracht,

e)  durch die Öffnungen wird Luft in den Abschnitt eingeblasen,

f)  der Abschnitt wird gegen ihn allseitig umgebende Stutzflächen blasgeformt.

Weitere Verfahrensmerkmale sind in den Ansprüchen 8 bis 13 angegeben.

Gemäß der Erfindung wird also zunächst ein Strangpreßprofil aus zwei sich im allgemeinen lediglich farblich unterscheidenden thermoplastischen Kunststoffen koextrudiert, das heißt die Materialien werden bei der Extrusion integral miteinander verbunden. Das Strangpreßprofil erhält dabei zumindest einen längsdurchlaufenden transparenten Streifen, der die Strangpreßprofilwandung durchsetzt, und eine flachlängliche Querschnittsöffnung, innerhalb der der Zierstreifen sitzt. Die Ausbildung einer relativ flachen oder engen Hohlkammer ist möglich, weil durch den Zierstreifen, der zum Beispiel aus einer 0,1 mm dicken Aluminiumfolie besteht, ein Ankleben der Wandungen vermieden wird. Das Strangpreßprofil wird auf Temperatur gehalten, indem es zum Beispiel durch einen Heizkanal geführt wird, und im heißen bzw. noch plastischen Zustand auf Rohlänge gestanzt. Danach wird der Rohling oder Vorformling in eine geöffnete Blasform hineinbewegt und die Blasform geschlossen. Während des Schließens der Blasform fährt an geeigneter Stelle ein Blasnadelsystem in den Profilhohlraum und mittels Blasluft wird der Hohlraum des Vorformlings vergrößert, wobei die noch plastische Formmasse in Anlage an die inneren Formwandungen der Blasform und der Zierstreifen in Anlage an eine innere Wandung der Profilleiste gelangt. Vor dem Einblasen der Luft werden durch entsprechende ausgebildete Formquetschkanten die Kopfenden des Profils abgequetscht und dabei miteinander verschweißt, wobei der Zierstreifen mit seinen Stirnenden in die Kopfendquetschungen eingebettet wird.

Zum Durchführen des Verfahrens ist erfindungsgemäß eine Vorrichtung vorgesehen, die gekennzeichnet ist durch einen Hauptextruder zum Extrudieren des farblichen Strangpreßprofilbereichs und einen Hilfsextruder zum gleichzeitigen Extrudieren des transparenten Längsstreifens wobei das Extrudieren um einen mitlaufenden Zierstreifen herum erfolgt, eine Trenneinrichtung zum Unterteilen des kontinuierlich aus dem Extruderkopf austretenden Strangpreßprofils in Abschnitte, ein nachgeschaltetes Transportband, durch welches jeder Abschnitt in einer gegenüber der Extrusionsgeschwindigkeit beschleunigten Bewegung einer Blasform zugeführt wird und durch eine, zum Greifen des Abschnittes und zum Hereinziehen desselben in die geöffnete Blasform dienende Greifereinrichtung. Aus Gründen einer rationellen Fertigung sind mindestens zwei Blasformen vorgesehen, die jeweils abwechselnd einen Abschnitt für dessen Endverformung aufnehmen. Weiterhin kann erfindungsgemäß vorgesehen sein, daß die Greifereinrichtung aus einer Kolben-Zylindereinheit mit einer Greiferzange am freien Kolbenende besteht und daß das Abzugsband, welches zwischen dem Extruder und dem Transportband angeordnet ist, beheizbar ist.

Die Erfindung wird nachfolgend anhand der Zeichnung näher erläutert. Es zeigen

Fig. 1    den Querschnitt durch ein aus einem Extruderkopf austretendes Strangpreßprofil,

Fig. 2    den Querschnitt durch einen Abschnitt des Strangprofils nach Fig. 1 nach der Blasverformung,

Fig. 3    die Ansicht einer blasverformten Profilleiste und

Fig. 4    in schematischer Darstellungsmanier eine Fertigungsvorrichtung zum Herstellen der Profilleisten.

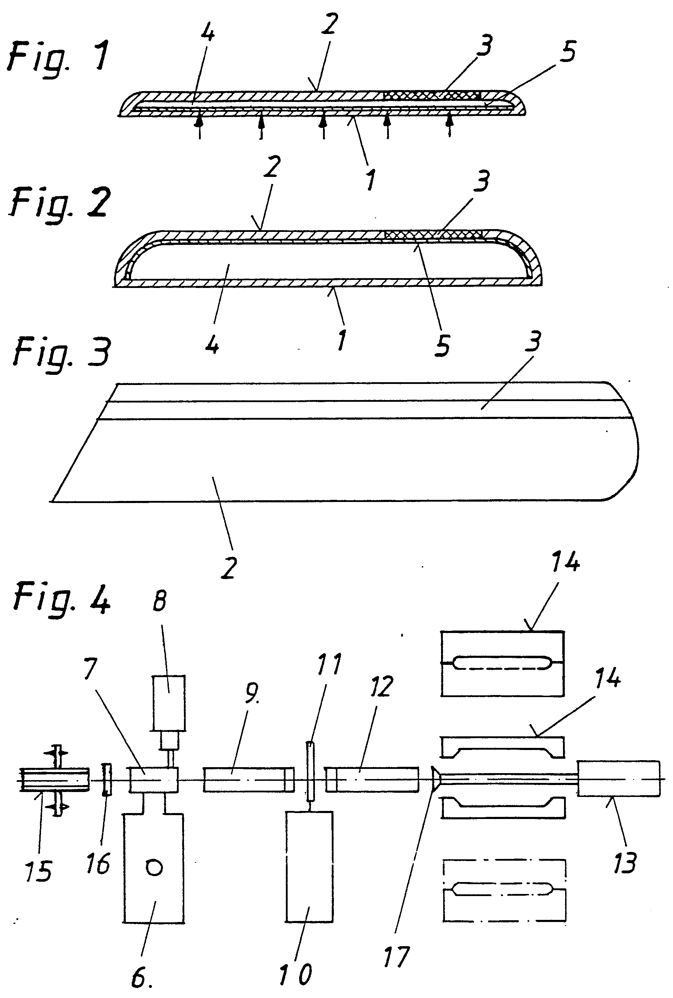

Die Profilleiste besteht aus einem allseitig geschlossenen, hohl ausgebildeten Kunststoff-Blasformkörper mit einem an einer nicht gezeigten Anschlußfläche zur Anlage kommenden rückseitigen Mantelbereich 1 und einem die Sichtseite bildenden vorderseitigen Mantelbereich 2. Der vorderseitige Mantelbereich 2 weist, wie dargestellt, mindestens einen längsdurchlaufenden Streifen 3 aus transparentem Kunststoffmaterial auf, während der übrige Mantelbereich der Profilleiste aus einem undurchsichtig eingefärbten Kunststoffmaterial besteht. Im Hohlraum 4 der Profilleiste ist ein Zierstreifen 5 angeordnet, der vorzugsweise, aber nicht notwendigerweise aus einem dünnen Aluminiumstreifen besteht. Der Zierstreifen 5 ist trotz seiner geschützten Anordnung im Hohlraum 4 der Profilleiste sichtbar, und zwar zufolge des ausschließlich für diesen Zweck vorgesehenen Streifens 3 aus transparentem Kunststoffmaterial. Wie Fig. 2 zeigt, befindet sich der Zierstreifen 5 in enger Anlage an der Innenseite des vorderseitigen Mantelbereichs 2.

Für die Herstellung der Profilleiste, die zum Beispiel die aus Fig. 3 ersichtliche Endform aufweisen kann, ist die in Fig. 4 mehr schematisch dargestellte Vorrichtung vorgesehen. Die Vorrichtung besteht im wesentlichen aus einem Hauptextruder 6 mit Querspritzkopf 7 und einem Hilfsextruder 8, einem Abzugsband 9, einer Trenneinrichtung 10 mit Trennwerkzeugen 11 einem Schnell-Laufband 12, einer Greifereinrichtung 13 und mindestens zwei Blasformen 14.

Bei der Herstellung der Profilleisten wird wie folgt verfahren: Von einer dem Extruder vorgeordneten Folienhaspel 15 wird ein Zierstreifen 5 durch eine im Querspritzkopf 7 angeordnete Pinole (nicht gezeigt) hindurchgeleitet. Der Zierstreifen 5 wird bei seinem Durchgang durch den Querspritzkopf 7 kontinuierlich mit Kunststoffmaterial umspritzt und zwar durch eine entsprechende Ausbildung des Spritzwerkzeuges derart, daß aus dem Querspritzkopf ein Strangpreßprofil der etwa in Fig. 1 gezeigten Art kontinuierlich heraustritt. Zwischen der Folienhaspel 15 und dem Querspritzkopf 7 kann eine Einrichtung 16 zum Auftragen eines Haftvermittlers auf den Zierstreifen 5 angeordnet sein. Das aus dem Querspritzkopf 7 austretende Strangpreßprofil wird mittels des Abzugsbandes

9, welches vorzugsweise beheizt wird, der Trenneinrichtung 10 zugeführt, wo ein Ablängen von Vorformlingen mittels Stanzmesser oder dergleichen Trennwerkzeugen 11 erfolgt. Jeder abgetrennte Vorformling wird nun durch das Schnell-Laufband 12 in einer gegenüber der Extrusionsgeschwindigkeit wesentlich erhöhten Geschwindigkeit in Richtung zu einer geöffneten Blasform 14 weitergeführt. Dabei wird dann der Vorformling von der Greifereinrichtung 13, bei der es sich vorzugsweise um eine Kolben-Zylinder-Einheit mit einer Greifzange 17 am freien Kolbenende handelt, ergriffen und in die jeweils parat stehende, geöffnete Blasform 14 hineingeführt und richtig plaziert. Die geöffnete Blasform wird hiernach geschlossen, wobei die Stirnenden des Abschnitts bzw. Vorformlings zusammengequetscht werden und eine Verschweißung stattfindet. Während des Schließens der Blasform fährt an geeigneter Stelle ein Blasnadelsystem (nicht gezeigt) in den Profil-Hohlraum 4 und mittels der dann zugeführten Blasluft wird der Hohlraum 4, dessen Ausgangsöffnungsquerschnitt aus Fig. 1 ersichtlich ist, vergrößert, und zwar so weit, bis der durch den Formhohlraum definierte Endquerschnitt und der Hohlraumquerschnitt nach Fig. 2 erreicht ist. Vorzugsweise wird die Luft von dem rückseitigen Mantelbereich 1 her in den Hohlraum 4 eingeblasen, so daß sie, wie in Fig. 1 durch Pfeile angedeutet, gegen den Zierstreifen 5 wirkt und diesen in Anlage an die Innenfläche des vorderen Mantelbereichs 2 bringt, wo es dann zufolge des aufgetragenen Haftvermittlers zu einem innigen Verbund kommt.

Es ist zweckmäßig, die Vorrichtung mit mindestens zwei Blasformen auszurüsten, so daß, während in der einen Blasform die Blasformoperation vollzogen wird, die andere Blasform geöffnet zur Aufnahme des jeweils nächstfolgenden Vorformlings bereitsteht. In Fig. 4 ist eine mittlere geöffnete Blasform 14 zur Aufnahme eines Vorformlings und eine darüber befindliche geschlossene Blasform angedeutet, in der gerade die Blasformoperation stattfindet. Nach dem Schließen der mittleren Blasform wird diese in die strichpunktiert angedeutete Lage und die dann entformte obere Blasform 14 in die mittlere Stellung bewegt. Es liegt selbstverständlich im Rahmen der vorliegenden Erfindung, auch mehrere Blasformen zum Beispiel auf einem sich intermittierend drehenden Karussell anzuordnen, um einer erhöhten Extrusionsgeschwindigkeit gerecht zu werden.

Ein besonderer Vorteil der erfindungsgemäßen Vorrichtung ist noch darin zu sehen, daß sie sowohl eine horizontale als auch eine vertikale Anordnung erlaubt. Es ist aber auch eine Anordnung denkbar, bei der die Koextrusion des Strangpreßprofils und das Ablängen und Weiterbefördern der Vorformlinge in horizontaler Richtung erfolgt, während das Verblasen der Vorformlinge in vertikal ausgerichteten Blasformen vorgenommen wird. Mit diesen Anordnungsmöglichkeiten läßt sich die Herstellung der Profilleisten auch bei begrenzten räumlichen Verhältnissen oftmals noch realisieren.

## Patentansprüche

1. Profilleiste, insbesondere für Fahrzeuge, bestehend aus einem allseitig geschlossenen, hohl ausgebildeten Kunststoff-Blasformkörper mit einem an einer Anschlußfläche zur Anlage kommenden rückseitigen Mantelbereich (1) und einem die Sichtseite bildenden vorderseitigen Mantelbereich (2) sowie aus einem Zierstreifen (5), dadurch gekennzeichnet, daß der Zierstreifen (5) innerhalb des Blasformkörpers angeordnet ist, und daß zum Sichtbarmachen desselben der vorderseitige Mantelbereich (2) zumindest einen längsdurchlaufenden Streifen (3) aus transparentem Material aufweist.

2. Profilleiste nach Anspruch 1, dadurch gekennzeichnet, daß sich der Zierstreifen (5) im wesentlichen über die Hohlraumlänge und -breite des Blasformkörpers erstreckt.

3. Profilleiste nach Anspruch 1 und/oder 2, dadurch gekennzeichnet, daß der Zierstreifen (5) an der Innenseite des vorderseitigen Mantelbereichs (2), vorzugsweise durch Verwendung eines Haftvermittlers, befestigt ist.

4. Profilleiste nach einem oder mehreren der Ansprüche 1 bis 3, dadurch gekennzeichnet, daß der Zierstreifen (5) zumindest mit seinen stirnseitigen Endbereichen im Übergangsbereich vom rückseitigen in den vorderseitigen Mantelbereich (1 bzw. 2) eingebettet ist.

5. Profilleiste nach einem oder mehreren der Ansprüche 1 bis 4, dadurch gekennzeichnet, daß der Zierstreifen (5) unabhängig von der jeweiligen Querschnittsform des Blasformkörpers eng an der Innenseite des vorderseitigen Mantelbereichs (2) anliegt.

6. Profilleiste nach einem oder mehreren der Ansprüche 1 bis 5, dadurch gekennzeichnet, daß der Zierstreifen (5) aus einem Metallband oder einer Metallfolie besteht.

7. Verfahren zum Herstellen einer Profilleiste nach den Ansprüchen 1 bis 6, gekennzeichnet durch folgende Verfahrensschritte:

a) ein Strangpreßprofil aus thermoplastischen Kunststoffen mit zumindest einem transparenten Längsstreifen wird um einen mitlaufenden Zierstreifen herum koextrudiert,

b) das Strangpreßprofil wird in Abschnitte unterteilt,

c) die Enden jedes Abschnittes werden zusammengequetscht,

d) in den Abschnitt werden Öffnungen eingebracht,

e) durch die Öffnungen wird Luft in den Abschnitt eingeblasen,

f) der Abschnitt wird gegen ihn allseitig umgebende Stützflächen blasgeformt.

8. Verfahren nach Anspruch 7, dadurch gekennzeichnet, daß die Abschnitte bis zum Einsetzen der Blasverformung auf Massetemperatur gehalten werden.

9. Verfahren nach Anspruch 7 oder 8, dadurch gekennzeichnet, daß als Zierstreifen ein Metallstreifen verwendet wird, der, bevor er mit thermoplastischen Kunststoffen umspritzt wird, einseitig eine Haftvermittlerbeschichtung erhält.

10. Verfahren nach einem oder mehreren der Ansprüche 7 bis 9, dadurch gekennzeichnet, daß die Öffnungen in den rückseitigen Mantelbereich des Abschnitts eingebracht werden, und der Zierstreifen mittels der durch die Öffnungen eingeblasenen Luft bis zur vorzugsweise konturengetreuen Anlage gegen die Innenseite des vorderen Mantelbereichs des Abschnittes bewegt und daran über den Haftvermittler angeklebt wird.

11. Verfahren nach einem oder mehreren der Ansprüche 7 bis 10, dadurch gekennzeichnet, daß das Strangpreßprofil kontinuierlich extrudiert wird und daß von dem Strangpreßprofil jeweils intermittierend ein Abschnitt abgetrennt, gegenüber der Extrusionsgeschwindigkeit beschleunigt weiterbewegt, einer Blasform zugeführt und darin endverformt wird.

12. Verfahren nach einem oder mehreren der Ansprüche 7 bis 11, dadurch gekennzeichnet, daß das Strangpreßprofil in einer im wesentlichen horizontalen Ausrichtung extrudiert, in Abschnitte geteilt und endverformt wird.

13. Verfahren nach einem oder mehreren der Ansprüche 7 bis 11, dadurch gekennzeichnet, daß das Strangpreßprofil in einer im wesentlichen vertikalen Ausrichtung extrudiert, in Abschnitte geteilt und endverformt wird.

14. Vorrichtung zum Durchführen des Verfahrens nach den Ansprüchen 7 bis 13, gekennzeichnet durch einen Hauptextruder (6) zum Extrudieren des farblichen Strangpreßprofilbereichs und einem Hilfsextruder (8) zum gleichzeitigen Extrudieren des transparenten Längsstreifens (3), wobei das Extrudieren um einen mitlaufenden Zierstreifen (5) herum erfolgt, eine Trenneinrichtung (10) zum Unterteilen des kontinuierlich aus dem Extruderkopf austretenden Strangpreßprofils in Abschnitte, ein nachgeschaltetes Transportband (12), durch welches jeder Abschnitt in einer gegenüber der Extrusionsgeschwindigkeit beschleunigten Bewegung einer Blasform (14) zugeführt wird, und durch eine, zum Greifen des Abschnitts und zum Hereinziehen desselben in die geöffnete Blasform (14) dienende Greifereinrichtung (13).

15. Vorrichtung nach Anspruch 14, dadurch gekennzeichnet, daß mindestens zwei Blasformen (14) vorgesehen sind, die jeweils abwechselnd einen Abschnitt für dessen Endverformung aufnehmen.

16. Vorrichtung nach Anspruch 14 oder 15, dadurch gekennzeichnet, daß die Greifereinrichtung (13) aus einer Kolben-Zylindereinheit mit einer Greiferzange (17) am freien Kolbenende besteht.

17. Vorrichtung nach Anspruch 14, gekennzeichnet durch ein beheiztes Abzugsband (9), welches zwischen dem Extruder (6) und dem Transportband (12) angeordnet ist.

**Claims**

1. A trim moulding, especially for vehicles, composed of a synthetic plastics material blow moulding of hollow formation closed on all sides, with a rear surface zone (1) coming to abut on an attachment surface and a front surface zone (2) forming the visible side, and also a decorative strip (5), chacterised in that the decorative strip (5) is arranged within the blow moulding, and in that, to make it visible, the front surface zone (2) comprises at least one continuously longitudinally extending strip (3) of transparent material.

2. A trim moulding according to Claim 1, characterised in that the decorative strip (5) extends substantially over the cavity length and width of the blow moulding.

3. A trim moulding according to Claim 1 and/or 2, characterised in that the decorative strip (5) is secured on the inside of the front surface zone (2), preferably by the use of an adhesion-imparting agent.

4. A trim moulding according to any one or more of Claims 1 to 3, characterised in that the decorative strip (5) is at least with its terminal end zones in the region of transition from the rear into the front surface zone (1 and 2 respectively).

5. A trim moulding according to any one or more of Claims 1 to 4, characterised in that the decorative strip (5) rests closely on the inside of the front surface zone (2), irrespective of the cross-sectional form of the of the blow moulding in each case.

6. A trim moulding according to any one or more of Claims 1 to 5, characterised in that the decorative strip (5) comprises a metal tape or a metal foil.

7. A method for the production of a trim moulding according to Claims 1 to 6, characterised by the following method steps:

a)  an extruded section of thermoplastic synthetic plastics materials with at least one transparent longitudinal strip is coextruded around an accompanying decorative strip,

b)  the extruded section is divided into lengths,

c)  the ends of each length are squeezed together,

d)  openings are formed in the length,

e)  air is blown into the length through the openings,

f)  the length is blow-moulded against support faces surrounding it on all sides.

8. A method according to Claim 7, characterised in that the lengths are held at substance temperature until the commencement of the blow moulding.

9. A method according to Claim 7 or 8, characterised in that, as a decorative strip, there is used a metal strip which, before it is surrounded by injection with thermoplastic synthetic plastic material receives a coating of adhesion-imparting agent on one side.

10. A method according to any one or more of Claims 7 to 9, characterised in that the openings are formed in the rear surface zone of the length and in that the decorative strip is moved against the inside of the front surface zone of the length by means of the air blown in through the openings, into preferably accurately-contoured abutment, and is stuck thereto by means of the adhesion-imparting agent.

11. A method according to any one or more of Claims 7 to 10, characterised in that the extruded section is continuously extruded and in that a length is severed, intermittently in each case, from the extruded section, is moved further with acceleration compared with the speed of extrusion, fed to a blow mould and finally shaped therein.

12. A method according to any one or more of Claims 7 to 11, characterised in that the extruded section is extruded in substantially horizontal orientation, divided into lengths and finally shaped.

13. A method according to any one or more of Claims 7 to 11, characterised in that the extruded section is extruded in substantially vertical orientation, divided into lengths and finally shaped.

14. An apparatus for carrying out the method according to Claims 7 to 13, characterised by a main extruder (6) for extruding the coloured extruded section zone and an auxiliary extruder (8) for the simultaneous extrusion of the transparent longitudinal strip (3), the extrusion taking place around a movement-accompanying decorative strip (5), a severing device (10) for dividing the extruded section, issuing continuously from the extruder head, into lengths, a subsequently placed conveyor belt (12) by which each length is fed to a blow mould (14) in a movement accelerated in comparison with the extrusion speed, and by a gripper device (13) serving for the gripping of the length and for drawing it into the opened blow mould (14).

15. An apparatus according to Claim 14, characterised in that at least two blow moulds (14) are provided which each in alternation receive a length for its final shaping.

16. An apparatus according to Claim 14 or 15, characterised in that the gripper device (13) consists of a piston-cylinder unit with a gripper tongs (17) at the free piston end.

17. An apparatus according to Claim 14, characterised by a heated offtake belt (9) which is arranged between the extruder (6) and the conveyor belt (12).

**Revendications**

1. Baguette profilée, en particulier pour véhicules, se composant d'un corps en matière plastique moulé par soufflage, fermé sur tous les côtés, creux, avec une zone d'enveloppe (1) de face arrière venant en appui sur une surface de raccordement et une zone d'enveloppe (2) de face avant formant le côté visible, ainsi que d'une bande de décoration (5), caractérisée en ce que la bande de décoration (5) est disposée à l'intérieur du corps moulé par soufflage et en ce que la zone d'enveloppe (2) de face avant présente au moins une bande (3) continue longitudinalement en matériau transparent, pour rendre visible la bande de décoration (5).

2. Baguette profilée selon la revendication 1, caractérisée en ce que la bande de décoration (5) s'étend sensiblement sur la longueur et la largeur de l'espace creux du corps moulé par soufflage.

3. Baguette profilée selon la revendication 1 et/ou 2, caractérisée en ce que la bande de décoration (5) est fixée sur la face intérieure de la zone d'enveloppe (2) de face avant, de préférence par utilisation d'un adhésif.

4. Baguette profilée selon une ou plusieurs des revendications 1 à 3, caractérisée en ce que la bande de décoration (5) est au moins encastrée avec ses zones d'extrémité côté frontal dans la zone de transition dans laquelle la zone d'enveloppe passe de la face arrière à la face avant (1, respectivement 2).

5. Baguette profilée selon une ou plusieurs des revendications 1 à 4, caractérisée en ce que la bande de décoration (5) appuie étroitement sur le côté intérieur de la zone d'enveloppe (2) de face avant, indépendamment de chaque forme de section transversale du corps moulé par soufflage.

6. Baguette profilée selon une ou plusieurs des revendications 1 à 5, caractérisée en ce que la bande de décoration (5) se compose de manière préférée d'une bande métallique ou d'une feuille métallique.

7. Procédé de fabrication d'une baguette profilée selon les 3 revendications 1 à 6, caractérisé par les étapes de procédés suivantes:

a) un profilé extrudé en matière thermoplastique avec au moins une bande longitudinale transparente est coextrudé autour d'une bande de décoration se déplaçant avec lui,

b) le profilé extrudé est subdivisé en sections,

c) les extrémités de chaque section sont assemblées par aplatissement,

d) des ouvertures sont pratiquées dans la section,

e) de l'air est soufflé dans la section, par les ouvertures,

f) la section est formée par soufflage face aux faces d'appui l'entourant de tous côtés.

8. Procédé selon la revendication 7, caractérisé en ce que les sections sont maintenues à la température de masse jusqu'à la mise en oeuvre du formage par soufflage.

9. Procédé selon la revendication 7 ou 8, caractérisé en ce qu'on utilise pour bande de décoration une bande métallique qui contient sur une face un revêtement adhésif, avant d'être enrobée par des matières thermoplastiques.

10. Procédé selon une ou plusieurs des revendications 7 à 9, caractérisé en ce que les ouvertures sont pratiquées dans la zone d'enveloppe de face arrière de la section et en ce que la bande de décoration est déplacée au moyen de l'air insufflé par les ouvertures, jusqu'à être en appui en épousant le contour, contre la face interne de la zone d'enveloppe avant de la section, et d'y être collé sur l'adhésif.

11. Procédé selon une ou plusieurs des revendications 7 à 10, caractérisé en ce que le profilé extrudé est extrudé en continu et en ce que l'on sépare chaque fois de manière intermittente une section du profilé extrudé, qu'on l'accélère par rapport à la vitesse d'extrusion, qu'on l'amène à un moule de soufflage et qu'on lui fait subir une déformation finale à l'intérieur.

12. Procédé selon une ou plusieurs des revendications 7 à 11, caractérisé en ce que le profilé extrudé est extrudé, divisé en sections et subit un formage final, ceci dans un alignement sensiblement horizontal.

13. Procédé selon une ou plusieurs des revendications 7 à 11, caractérisé en ce que le profilé extrudé est extrudé, divisé en sections et subit un formage final, ceci dans un alignement sensiblement vertical.

14. Procédé selon une ou plusieurs des revendications 7 à 13, caractérisé par une extrudeuse principale (6), pour extruder la zone colorée de profilé extrudé et par une extrudeuse auxiliaire (8) pour extruder simultanément la bande longitudinale (3) transparente, l'extrusion s'effectuant autour d'une bande de décoration (5) se déplaçant avec, par un dispositif de séparation (10) pour subdiviser en sections le profilé extrudé sortant en continu de la tête d'extrudeuse, par une bande transporteuse (12) montée en aval, au moyen de laquelle chaque section est amenée à un moule de soufflage (14) dans un mouvement d'accélération par rapport à la vitesse d'extrusion et par un dispositif de prise (13) servant à saisir la section et à l'introduire dans le moule de soufflage (14).

15. Procédé selon la revendication 14, caractérisé en ce qu'au moins deux moules de moulage (14) sont prévus recevant chacun alternativement une section pour son formage final.

16. Procédé selon la revendication 14 ou 15, caractérisé en ce que le dispositif de prise (13) se compose d'une unité piston-cylindre avec une pince de saisie (17) sur l'extrémité libre de piston.

17. Procédé selon la revendication 14, caractérisé par une bande d'extraction (9) chauffée, disposée entre l'extrudeuse (9) et la bande transporteuse (12).

Fig. 1

Fig. 2

Fig. 3

Fig. 4